# EUROPÄISCHE PATENTSCHRIFT

(11) **EP 4 414 225 B1**
(45) Veröffentlichungstag und Bekanntmachung des Hinweises auf die Patenterteilung: **28.01.2026**
(21) Anmeldenummer: 24156083.8
(22) Anmeldetag: 06.02.2024
(51) Int. Cl.: B60T 7/20, B60D 1/30, B60D 1/62, B60T 8/17, B60T 8/24

(54) **ANHÄNGER FÜR EIN ZUGFAHRZEUG SOWIE VERFAHREN ZUM BETREIBEN EINES SOLCHEN ANHÄNGERS**
TRAILER FOR A TOWING VEHICLE AND METHOD FOR OPERATING SUCH A TRAILER
REMORQUE POUR UN VÉHICULE TRACTEUR AINSI QUE PROCÉDÉ DE FONCTIONNEMENT D'UNE TELLE REMORQUE

(30) Priorität: 06.02.2023 DE 102023102840
(43) Veröffentlichungstag der Anmeldung: 14.08.2024
(73) Patentinhaber: Reich Gesellschaft mbH Regel- und Sicherheitstechnik, 35713 Eschenburg (DE); Knott GmbH, D-83125 Eggstätt (DE)
(72) Erfinder: Schaurer, Oliver, Oberding (DE); Christian, Mertinko, Palling (DE); Josef, Strasser, Gstadt am Chiemsee (DE)
(74) Vertreter: Hofstetter, Schurack & Partner

(56) Entgegenhaltungen:
- EP-A1- 3 564 051
- EP-A1- 3 912 871
- DE-U1- 202015 106 595

## Beschreibung

Die vorliegende Erfindung betrifft einen Anhänger, insbesondere einen Wohnwagen, einen Caravan, einen Bootsanhänger, einen Verkaufswagen, einen Transportanhänger oder einen Autotransportanhänger, für ein Zugfahrzeug gemäß dem Oberbegriff von Anspruch 1. Ferner betrifft die Erfindung ein Verfahren zum Betreiben eines solchen Anhängers gemäß dem Oberbegriff von Anspruch 5.

Der EP 3 507 149 B1 ist ein Verfahren zum elektronischen Steuern einer Bremsanlage mit zwei Bremssystemen für ein automatisiert steuerbares Fahrzeug-Gespann als bekannt zu entnehmen. Des Weiteren offenbart die EP 2 512 890 B1 ein Verfahren zum Signalisieren eines Bremsvorgangs an einem Anhängerfahrzeug. Außerdem ist aus der EP 3 564 051 A1 eine Anhängerstabilisierungseinrichtung für einen Anhänger bekannt.

Aufgabe der vorliegenden Erfindung ist es, einen Anhänger und ein Verfahren der eingangs genannten Art derart weiterzuentwickeln, dass ein besonders sicherer Betrieb des Anhängers realisiert werden kann.

Diese Aufgabe wird erfindungsgemäß durch einen Anhänger mit den Merkmalen des Anspruchs 1 sowie durch ein Verfahren mit den Merkmalen des Anspruchs 5 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Anhänger für ein Zugfahrzeug. Beispielsweise kann der Anhänger als ein Wohnwagen, ein Caravan, ein Bootsanhänger, ein Verkaufswagen, ein Transportanhänger, ein Autotransportanhänger oder als ein anderer Anhänger ausgebildet sein. Der Anhänger ist ein Fahrzeug, insbesondere ein Landfahrzeug, sodass der Anhänger auch als Fahrzeug bezeichnet wird. Der Anhänger weist wenigstens oder genau zwei Bodenkontaktelemente auf, über welche der Anhänger entlang seiner auch als Fahrzeughochrichtung bezeichneten Hochrichtung nach unten hin an einem Boden abstützbar oder abgestützt ist. Insbesondere sind die Bodenkontaktelemente Fahrzeugräder, welche auch einfach als Räder bezeichnet werden. Dabei sind beispielsweise die Bodenkontaktelemente drehbar an einem Fahrgestell des Anhängers gehalten, sodass dann, wenn der Anhänger insbesondere mittels des genannten Zugfahrzeugs entlang des genannten Bodens gefahren, insbesondere geschoben oder gezogen, wird, während der Anhänger in Fahrzeughochrichtung des Anhängers nach unten hin über die Bodenkontaktelemente an dem Boden abgestützt ist, die Bodenkontaktelemente, insbesondere direkt, an dem Boden abrollen. Bei dem Fahrgestell handelt es sich beispielsweise um einen Rahmen des Anhängers. Der Anhänger kann dabei beispielsweise einen insbesondere separat von dem Rahmen ausgebildeten und an dem Rahmen gehaltenen Aufbau aufweisen, durch welchen beispielsweise ein Innenraum des Anhängers begrenzt ist. Beispielsweise können sich Personen in dem Innenraum aufhalten.

Der Anhänger weist außerdem eine Bremseinrichtung auf, mittels welcher die Bodenkontaktelemente insbesondere relativ zu dem Fahrgestell abgebremst werden können. Mit anderen Worten können mittels der Bremseinrichtung die Bodenkontaktelemente insbesondere hinsichtlich ihrer relativ zu dem Fahrgestell erfolgenden Drehungen relativ zu dem Fahrgestell abgebremst oder verlangsamt werden, wodurch der Anhänger insgesamt abgebremst werden kann. Die Bremseinrichtung ist beispielsweise eine Betriebsbremsanlage zum Abbremsen des Anhängers, oder die Bremseinrichtung ist Bestandteil einer solchen Betriebsbremsanlage zum Abbremsen des Anhängers.

Beispielsweise weist der Anhänger wenigstens oder genau eine einfach auch als Achse bezeichnete Fahrzeugachse auf, wobei vorzugsweise die Bodenkontaktelemente Bestandteile der Fahrzeugachse sind. Dabei sind beispielsweise die Bodenkontaktelemente auf in Fahrzeugquerrichtung des Anhängers einander gegenüberliegenden Seiten des Anhängers angeordnet. Es ist denkbar, dass der Anhänger wenigstens oder genau zwei einfach auch als Achsen bezeichnete Fahrzeugachsen aufweist, wobei die Fahrzeugachsen beispielsweise in Fahrzeuglängsrichtung des Anhängers hintereinander und somit aufeinanderfolgend angeordnet sind. Die jeweilige Fahrzeugachse weist beispielsweise wenigstens oder genau zwei Bodenkontaktelemente auf, wobei beispielsweise die jeweiligen Bodenkontaktelemente der jeweiligen Fahrzeugachse auf in Fahrzeugquerrichtung einander gegenüberliegenden Seiten des Anhängers angeordnet sind. Dabei können beispielsweise mittels der Bremseinrichtung wenigstens oder genau zwei der Bodenkontaktelemente abgebremst werden.

Der Anhänger weist außerdem wenigstens eine heckseitige und/oder in Fahrzeuglängsrichtung des Anhängers nach hinten weisende Bremsleuchte auf. Die Bremsleuchte umfasst beispielsweise wenigstens eine Lichtquelle, mittels welcher insbesondere mit dem menschlichen Auge wahrnehmbares, auch als Bremslicht bezeichnetes Licht, insbesondere mit einer roten Farbe, ausstrahlbar, das heißt in eine Umgebung des Anhängers und dabei insbesondere in Fahrzeuglängsrichtung des Anhängers nach hinten hin ausstrahlbar ist. Der Anhänger weist außerdem eine Anhängerstabilisierungseinrichtung auf, wie sie beispielsweise bereits aus der EP 3 564 051 A1 bekannt ist. Die Anhängerstabilisierungseinrichtung weist wenigstens oder genau einen Aktor auf, mittels welchem zum Stabilisieren einer Fahrt des Anhängers unter Betreiben des Aktors, das heißt durch Betreiben des Aktors, die Bremseinrichtung betätigbar und dadurch wenigstens eines der Bodenkontaktelemente des Anhängers, insbesondere relativ zum Fahrgestell, abbremsbar ist. Dies bedeutet, dass mittels der Anhängerstabilisierungseinrichtung eine Fahrt des Anhängers stabilisiert werden kann, indem der Aktor betrieben wird, wobei durch dieses Betreiben des Aktors das wenigstens eine Bodenkontaktelement abbremsbar ist oder abgebremst wird. Unter dem auch als Stabilisierung bezeichneten Stabilisieren des Anhängers kann insbesondere verstanden werden, dass mittels des Aktors einem unerwünschten Fahrzustand beziehungsweise unerwünschten, relativ zu einer Fahrbahn, entlang welcher der Anhänger fährt, erfolgenden Bewegungen, insbesondere Aufbaubewegungen, des Anhängers entgegengewirkt werden kann, indem der Aktor betrieben wird. Insbesondere kann es sich bei der Fahrbahn beispielsweise um den zuvor genannten Boden handeln. Auf diese Weise kann beispielsweise eine unerwünschte Fahrsituation beziehungsweise ein unerwünschter Fahrzustand des Anhängers vermieden werden, und insbesondere kann ein erwünschter Zustand, insbesondere ein erwünschter Fahrzustand, des Anhängers bewirkt werden. Dadurch, dass unerwünschten, relativ zu der Fahrbahn erfolgenden Bewegungen, insbesondere Aufbaubewegungen, des entlang der Fahrbahn fahrenden Anhängers mittels des Aktors entgegengewirkt werden kann, indem der Aktor betrieben wird, kann beispielsweise vermieden werden, dass der Anhänger umkippt und/oder dass es zu unerwünschten beziehungsweise übermäßigen Schlingerbewegungen des Anhängers, insbesondere relativ zu dem mit dem Anhänger insbesondere gelenkig gekoppelten oder koppelbaren Zugfahrzeug, kommt. Somit können beispielsweise mittels des wenigstens einen Aktors übermäßige Bewegungen, insbesondere übermäßige Schlingerbewegungen, des Anhängers relativ zu dem Zugfahrzeug vermieden werden. Insbesondere kann der Aktor die Bremseinrichtung unabhängig von einer Betätigung einer Bremsanlage des Zugfahrzeugs, das heißt ohne dass eine Bremsanlage des Zugfahrzeugs betätigt wird, betätigen. Das Betätigen der Bremseinrichtung des Anhängers mittels des Aktors und das daraus resultierende Abbremsen des wenigstens einen Bodenkontaktelements wird auch als Bremseingriff bezeichnet, sodass der Aktor Bremseingriffe durchführen kann, ohne dass eine Bremsanlage, wie beispielsweise eine Betriebsbremse des Zugfahrzeug, betätigt wird.

Da die Anhängerstabilisierungseinrichtung Bestandteil des Anhängers ist, umfasst der Anhänger die Anhängerstabilisierungseinrichtung und somit den Aktor. Die Anhängerstabilisierungseinrichtung und somit der Anhänger umfassen außerdem eine auch als Steuergerät bezeichnete, elektronische Recheneinrichtung, mittels welcher der Aktor, insbesondere elektrisch oder elektronisch, ansteuerbar und dadurch betreibbar ist, um dadurch die Bremseinrichtung des Anhängers insbesondere unabhängig von einer Betätigung einer Bremsanlage des Zugfahrzeugs, das heißt ohne dass eine Bremsanlage des Zugfahrzeugs betätigt wird, zu betätigen. Beispielsweise kann die elektronische Recheneinrichtung wenigstens ein insbesondere elektrisches Ansteuersignal bereitstellen, wobei beispielsweise der Aktor das Ansteuersignal empfangen kann. Hierdurch kann der Aktor angesteuert werden, insbesondere unabhängig von einer Betätigung einer Bremsanlage des Zugfahrzeugs, das heißt ohne dass eine Bremsanlage des Zugfahrzeugs betätigt wird. Durch das Ansteuern des Aktors kann beispielsweise der Aktor gesteuert oder vorzugsweise geregelt werden.

Um nun einen besonders sicheren Betrieb des Anhängers realisieren zu können, ist es erfindungsgemäß vorgesehen, dass die elektronische Recheneinrichtung der Anhängerstabilisierungseinrichtung und somit des Anhängers dazu ausgebildet ist, die Bremsleuchte insbesondere unabhängig von einer Betätigung einer Bremsanlage des Zugfahrzeugs, das heißt ohne dass eine Bremsanlage des Zugfahrzeugs betätigt wird, anzusteuern, um dadurch insbesondere unabhängig von einer Betätigung einer Bremsanlage des Zugfahrzeugs, das heißt ohne dass eine Bremsanlage des Zugfahrzeugs betätigt wird, mittels der Bremsleuchte bei dem mittels der elektronischen Recheneinrichtung durch Ansteuern des Aktors bewirkten Bremsen des wenigstens einen Bodenkontaktelements das vorzugsweise rote Licht, welches mit dem Menschenauge und somit von einer sich in der Umgebung des Anhängers aufhaltenden Person optisch wahrnehmbar ist, an die Umgebung des Anhängers auszustrahlen. Dadurch kann beispielsweise dann, wenn während einer Fahrt des Anhängers der Aktor insbesondere ohne dass eine Bremsanlage des Zugfahrzeugs betätigt wird einen Bremseingriff durchführt, um dadurch den Anhänger zu stabilisieren, wenigstens ein rückwärtiger, das heißt hinter dem Anhänger fahrender Verkehrsteilnehmer optisch auf den Bremseingriff und somit auf ein daraus resultierendes Abbremsen des Anhängers hingewiesen werden, sodass ein besonders sicherer Betrieb darstellbar ist.

Bei herkömmlichen Lösungen wird die Bremsleuchte dann, wenn der Anhänger mittels der Anhängerstabilisierungseinrichtung durch einen Bremseingriff stabilisiert wird, ohne dass eine Bremsanlage des Zugfahrzeugs betätigt wird, nicht aktiviert, da die Bremsanlage des Zugfahrzeugs nicht betätigt wird und die Bremsleuchte üblicherweise nur bei einer Betätigung der Bremsanlage des Zugfahrzeugs aktiviert wird. Demgegenüber ermöglicht es nun die Erfindung, dass die Bremsleuchte des Anhängers nicht nur bei einer Betätigung der Bremsanlage des Zugfahrzeugs, sondern insbesondere auch dann aktiviert wird, wenn zum Stabilisieren des Anhängers der Aktor einen Bremseingriff durchführt, ohne dass die Bremsanlage beziehungsweise eine Bremsanlage des Zugfahrzeugs betätigt wird. Dadurch können beispielsweise rückwärtige, mithin hinter dem Anhänger fahrende Verkehrsteilnehmer auf den Bremseingriff beziehungsweise auf eine Abbremsung des Anhängers hingewiesen werden, wodurch eine besonders hohe Sicherheit gewährleistet werden kann. In mit dem Zugfahrzeug gekoppeltem Zustand ist beispielsweise die elektronische Recheneinrichtung zwischen der Bremsleuchte und dem Zugfahrzeug zwischengeschaltet. Hierdurch können die Bremsleuchte und somit das Bremslicht aktiviert werden, wenn eine Bremsanlage des Zugfahrzeugs betätigt wird, und die Bremsleuchte kann mittels des Steuergeräts unabhängig von einer Betätigung einer Bremsanlage des Fahrzeugs aktiviert werden, mithin ohne dass eine Bremsanlage des Zugfahrzeugs betätigt wird. Unter dem Aktivieren der Bremsleuchte und somit des Bremslichts ist zu verstehen, dass durch das Aktivieren der Bremsleuchte beziehungsweise infolge des Aktivierens der Bremsleuchte die Bremsleuchte das genannte Licht, mithin das Bremslicht an die Umgebung des Anhängers ausstrahlt, wodurch rückwärtige Verkehrsteilnehmer auf eine Betätigung der Bremseinrichtung des Anhängers, mithin auf ein Abbremsen des wenigstens einen Bodenkontaktelements hingewiesen werden können.

Als besonders vorteilhaft hat es sich gezeigt, wenn der Anhänger einen eigenen elektrischen Energiespeicher zum, insbesondere elektrochemischen, Speichern von elektrischer Energie aufweist. Unter dem Merkmal, dass der elektrische Energiespeicher ein eigener Energiespeicher des Anhängers ist, ist zu verstehen, dass der Energiespeicher ein Bestandteil des Anhängers und nicht etwa des Zugfahrzeugs ist. Dabei ist es vorgesehen, dass die Bremsleuchte mit der in dem Energiespeicher gespeicherten, elektrischen Energie versorgbar ist, um dadurch die Bremsleuchte und somit das Bremslicht zu aktivieren, mithin um dadurch mittels der Bremsleuchte bei dem mittels der elektronischen Recheneinrichtung durch Ansteuern des Aktors bewirkten Bremsen des wenigstens einen Bodenkontaktelements das Licht (Bremslicht) an die Umgebung des Anhängers auszustrahlen. Somit ist es möglich, die Bremsleuchte zu aktivieren, mithin auf den oder einen durch den Aktor bewirkten Bremseingriff optisch hinzuweisen, insbesondere auch dann, wenn beispielsweise die Bremsleuchte von einer beispielsweise als Batterie ausgebildeten Energiequelle des Zugfahrzeugs getrennt ist. Hintergrund dieser Ausführungsform ist insbesondere, dass es bei modernen, beispielsweise als Kraftwagen, insbesondere als Personenkraftwagen, ausgebildeten Kraftfahrzeugen, die als Zugfahrzeuge zum Ziehen und Schieben von Anhängern verwendet werden, vorgesehen sein kann, dass alle als unnötig eingestuften Verbraucher wie beispielsweise Anhänger abgeschaltet, mithin von einem Bordnetz und somit von einer Energiequelle getrennt werden, um einen Stromverbrauch der Verbraucher zu vermeiden. Die Erfindung ermöglicht es nun, die Bremsleuchte und somit das Bremslicht insbesondere auch dann zu aktivieren, wenn die Bremsleuchte beziehungsweise der gesamte Anhänger von der Energiequelle beziehungsweise dem Bordnetz des Zugfahrzeugs getrennt ist. Dadurch kann auch dann auf einen durch den Aktor bewirkten Bremseingriff optisch hingewiesen werden, wenn die Bremsleuchte beziehungsweise der gesamte Anhänger von dem Bordnetz des Zugfahrzeugs getrennt ist.

Beispielsweise ist hierfür wenigstens ein zum Leiten oder Führen von elektrischer Energie, mithin elektrischem Strom ausgebildetes Leitungselement vorgesehen, über welches die Bremsleuchte mit der in dem Energiespeicher gespeicherten, elektrischen Energie versorgbar ist. Beispielsweise ist die Bremsleuchte über das Leitungselement elektrisch mit dem Energiespeicher verbunden oder verbindbar.

Als besonders vorteilhaft hat es sich gezeigt, wenn die Anhängerstabilisierungseinrichtung wenigstens ein Anschlusselement aufweist, welches mit einer zum Bereitstellen von Energie, insbesondere von elektrischer Energie, ausgebildeten Energiequelle des Zugfahrzeugs elektrisch verbindbar ist. Dies bedeutet, dass das Anschlusselement zumindest mittelbar, insbesondere direkt, mit dem Zugfahrzeug und somit mit der Energiequelle des Zugfahrzeugs verbunden werden kann. Dadurch kann die von der Energiequelle bereitgestellte, elektrische Energie von der Energiequelle an das beziehungsweise auf das Anschlusselement übertragen und beispielsweise von dem Anschlusselement bereitgestellt werden. Da die Energiequelle des Zugfahrzeugs Bestandteil des Zugfahrzeugs und nicht etwa Bestandteil des Anhängers ist, und da das Zugfahrzeug ein bezüglich des Anhängers externes, zusätzlich zu dem Anhänger vorgesehenes und separat von dem Anhänger ausgebildetes Fahrzeug ist, ist die Energiequelle des Zugfahrzeugs eine bezüglich des Anhängers und somit bezüglich der Anhängerstabilisierungseinrichtung externe, zusätzlich dazu vorgesehene Komponente, welche nicht Bestandteil des Anhängers beziehungsweise nicht Bestandteil der Anhängerstabilisierungseinrichtung ist.

Dabei ist es insbesondere vorgesehen, dass der Energiespeicher mit der von dem Anschlusselement bereitgestellten oder bereitstellbaren, elektrischen Energie versorgbar ist, sodass die von dem Anschlusselement bereitgestellte oder bereitstellbare, elektrische Energie in dem Energiespeicher gespeichert werden kann. Somit ist der Aktor über das Anschlusselement mit der von der Energiequelle des Zugfahrzeugs bereitgestellten, elektrischen Energie versorgbar, sodass über das Anschlusselement die von der Energiequelle des Zugfahrzeugs bereitgestellte oder bereitstellbare, elektrische Energie in dem Energiespeicher gespeichert werden kann. Der Energiespeicher kann somit beispielsweise als Puffer verwendet werden, der mit der Energiequelle des Zugfahrzeugs beispielsweise über das Bordnetz des Zugfahrzeugs bereitgestellten, elektrischen Energie geladen und dadurch die elektrische Energie, mithin den elektrischen Strom speichern, insbesondere zwischenspeichern, kann. Mit der in dem Energiespeicher des Anhängers gespeicherten, elektrischen Energie kann die Bremsleuchte aktiviert und somit betrieben werden, wodurch ein besonders sicherer Betrieb darstellbar ist. Alternativ oder zusätzlich kann beispielsweise der Aktor mittels der von dem Anschlusselement bereitstellbaren oder bereitgestellten, elektrischen Energie betrieben werden, sodass beispielsweise der Aktor über das Anschlusselement mit der von der Energiequelle des Zugfahrzeugs bereitgestellten oder bereitstellbaren, elektrischen Energie betrieben werden kann. Somit hat es sich als besonders vorteilhaft gezeigt, wenn der Aktor elektrisch betreibbar ist, mithin ein elektrisch betreibbarer Aktor ist.

Eine weitere Ausführungsform zeichnet sich dadurch aus, dass der Aktor als ein elektrisch betreibbarer Aktor ausgebildet und mit der in dem Energiespeicher des Anhängers gespeicherten, elektrischen Energie versorgbar und dadurch mittels der in dem Energiespeicher gespeicherten, elektrischen Energie betreibbar ist. Dadurch kann beispielsweise der Aktor insbesondere auch dann Bremseingriffe durchführen und somit insbesondere auch dann den Anhänger beziehungsweise dessen Fahrt stabilisieren, wenn der Aktor beziehungsweise der Anhänger insgesamt von dem Zugfahrzeug beziehungsweise dessen Bordnetz getrennt ist, sodass der Anhänger nicht (mehr) von dem Zugfahrzeug mit elektrischer Energie versorgt werden kann. Dadurch kann eine besonders hohe Sicherheit gewährleistet werden.

Um eine besonders hohe Sicherheit realisieren zu können, ist es in weiterer Ausgestaltung der Erfindung vorgesehen, dass die elektronische Recheneinrichtung mit der in dem Energiespeicher gespeicherten, elektrischen Energie versorgbar und dadurch mittels der in dem Energiespeicher gespeicherten, elektrischen Energie betreibbar ist. Dadurch kann beispielsweise die elektronische Recheneinrichtung den Aktor insbesondere auch dann, insbesondere elektrisch oder elektronisch, ansteuern, wenn der Anhänger und somit die elektronische Recheneinrichtung von dem Zugfahrzeug beziehungsweise von dessen Bordnetz getrennt ist. Dadurch kann die elektronische Recheneinrichtung durch Ansteuern des Aktors insbesondere auch dann einen Bremseingriff bewirken und somit insbesondere auch dann den Anhänger stabilisieren, wenn der Anhänger von dem Zugfahrzeug beziehungsweise von dessen Bordnetz getrennt ist. Dadurch kann eine besonders hohe Sicherheit gewährleistet werden.

Ferner ist es beispielsweise denkbar, dass die elektronische Recheneinrichtung mit der von dem Anschlusselement bereitstellbaren oder bereitgestellten, elektrischen Energie versorgbar und somit mittels der von dem Anschlusselement bereitgestellten oder bereitstellbaren elektrischen Energie betreibbar ist, sodass beispielsweise die elektronische Recheneinrichtung über das Anschlusselement mit der von der Energiequelle des Zugfahrzeugs bereitgestellten oder bereitstellbaren, elektrischen Energie versorgbar und dadurch betreibbar ist.

Beispielsweise ist wenigstens ein zweites Leitungselement vorgesehen, über welches der Aktor mit der in dem elektrischen Energiespeicher gespeicherten, elektrischen Energie versorgbar ist. Beispielsweise ist der Aktor mittels des zweiten Leitungselements elektrisch mit dem Energiespeicher verbunden oder verbindbar. Alternativ oder zusätzlich kann beispielsweise ein drittes Leitungselement vorgesehen sein, über welches die elektronische Recheneinrichtung mit der in dem Energiespeicher gespeicherten, elektrischen Energie versorgbar ist. Dabei ist beispielsweise die elektronische Recheneinrichtung mittels des dritten Leitungselements elektrisch mit dem elektrischen Energiespeicher verbunden oder verbindbar.

Ein zweiter Aspekt der Erfindung betrifft ein Verfahren zum Betreiben eines Anhängers für ein Zugfahrzeug, insbesondere eines Anhängers gemäß dem ersten Aspekt der Erfindung. Bei dem Verfahren weist der Anhänger wenigstens zwei Bodenkontaktelemente auf, über welche der Anhänger in Fahrzeughochrichtung des Anhängers nach unten hin an einem Boden abgestützt ist. Bei dem Verfahren weist der Anhänger eine Bremseinrichtung zum Bremsen der Bodenkontaktelemente auf. Außerdem weist der Anhänger bei dem Verfahren wenigstens eine Bremsleuchte auf, die beispielsweise am Heck des Anhängers angeordnet ist. Des Weiteren weist der Anhänger bei dem Verfahren eine Anhängerstabilisierungseinrichtung auf, welche wenigstens einen vorzugsweise elektrisch betreibbaren Aktor aufweist, mittels welchem unter Betreiben des Aktors die Bremseinrichtung betätigt wird, wodurch wenigstens eines der Bodenkontaktelemente abgebremst und eine Fahrt des Anhängers stabilisiert wird. Mit anderen Worten ist es vorgesehen, dass der Aktor bei dem Verfahren betrieben wird, wodurch der Aktor die Bremseinrichtung betätigt. Hierdurch wird das wenigstens eine Bodenkontaktelement abgebremst, und eine Fahrt des Anhängers wird stabilisiert. Die Anhängerstabilisierungseinrichtung weist bei dem Verfahren außerdem eine elektronische Recheneinrichtung auf, mittels welcher der Aktor angesteuert und dadurch betrieben wird, wodurch die Bremseinrichtung des Anhängers betätigt wird.

Um nun eine besonders hohe Sicherheit realisieren zu können, ist es bei dem erfindungsgemäßen Verfahren vorgesehen, dass die Bremsleuchte insbesondere unabhängig von einer Betätigung einer Bremsanlage des Zugfahrzeugs, das heißt ohne dass eine Betätigung einer Bremsanlage des Zugfahrzeugs erfolgt mittels der elektronischen Recheneinrichtung angesteuert wird, wodurch insbesondere unabhängig von einer Betätigung einer Bremsanlage des Zugfahrzeugs, das heißt ohne dass eine Betätigung einer Bremsanlage des Zugfahrzeugs erfolgt, mittels der Bremsleuchte bei dem mittels der elektronischen Recheneinrichtung durch Ansteuern des Aktors bewirkten Bremsen des wenigstens einen Bodenkontaktelements Licht, welches auch als Bremslicht bezeichnet wird, an eine Umgebung des Anhängers ausgestrahlt wird. Dabei wird das Licht (Bremslicht) durch die Bremsleuchte bereitgestellt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Unter dem Merkmal, dass die Bremsleuchte mittels der elektronischen Recheneinrichtung ansteuerbar ist oder angesteuert wird, ist zu verstehen, dass die elektronische Recheneinrichtung eine Versorgung der Bremsleuchte mit, insbesondere elektrischer, Energie, insbesondere aktiv, veranlasst oder bewirkt, wodurch die Bremsleuchte mit der insbesondere elektrischen Energie versorgt und in der Folge mittels der insbesondere elektrischen Energie betrieben wird, derart, dass die Bremsleuchte das mit dem Menschenauge wahrnehmbare Licht (Bremslicht) bereitstellt und an die Umgebung ausstrahlt. Somit beispielsweise unter dem Ansteuern der Bremsleuchte durch die elektronische Recheneinrichtung zu verstehen, dass die elektronische Recheneinrichtung ein Schließen eines Schalters bewirkt, sodass beispielsweise über den geschlossenen Schalter die Bremsleuchte mit der insbesondere elektrischen Energie versorgt wird, wodurch die Bremsleuchte unter Nutzung der insbesondere elektrischen Energie, mit welcher die Bremsleuchte versorgt wird, das Licht an oder in die Umgebung ausstrahlt.

Als besonders vorteilhaft hat es sich gezeigt, wenn der Anhänger einen eigenen elektrischen Energiespeicher zum Speichern von elektrischer Energie aufweist, wobei die Bremsleuchte mit der in dem Energiespeicher gespeicherten, elektrischen Energie versorgt wird, wodurch die Bremsleuchte betrieben und mittels der Bremsleuchte bei dem mittels der elektronischen Recheneinrichtung durch Ansteuern des Aktors bewirkten Bremsen des wenigstens einen Bodenkontaktelements das Licht an die Umgebung des Anhängers ausgestrahlt wird. Hierdurch kann beispielsweise wenigstens ein hinter dem Anhänger fahrender Verkehrsteilnehmer auf das Bremsen des wenigstens einen Bodenkontaktelements und somit auf das Stabilisieren des Anhängers hingewiesen werden, insbesondere auch dann, wenn der Anhänger von dem Zugfahrzeug elektrisch getrennt ist, mithin nicht von dem Zugfahrzeug mit elektrischer Energie versorgt werden kann. Dadurch kann eine besonders hohe Sicherheit gewährleistet werden.

Eine weitere Ausführungsform zeichnet sich dadurch aus, dass der Aktor als ein elektrisch betreibbarer Aktor ausgebildet und mit der in dem Energiespeicher gespeicherten, elektrischen Energie versorgt und dadurch mittels der in dem Energiespeicher gespeicherten, elektrischen Energie betrieben wird. Hierdurch kann der Aktor den Anhänger insbesondere auch dann stabilisieren, wenn der Anhänger elektrisch von dem Zugfahrzeug getrennt ist, sodass eine besonders hohe Sicherheit dargestellt werden kann. Schließlich hat es sich als besonders vorteilhaft gezeigt, wenn die elektronische Recheneinrichtung mit der in dem Energiespeicher gespeicherten, elektrischen Energie versorgt und dadurch mittels der in dem Energiespeicher gespeicherten, elektrischen Energie betrieben wird. Hierdurch kann die elektronische Recheneinrichtung den Aktor insbesondere auch dann ansteuern, wenn der Anhänger elektrisch von dem Zugfahrzeug getrennt, mithin nicht von dem Zugfahrzeug mit elektrischer Energie versorgt werden kann. Hierdurch kann eine besonders sichere Fahrt des Anhängers realisiert werden. Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung vorwendbar, ohne den, durch den Gegenstand der Ansprüche festgelegten Rahmen der Erfindung zu verlassen.

Die Zeichnung zeigt in:
- Fig. 1: eine schematische Perspektivansicht eines Gespanns, welches ein Zugfahrzeug und einen mit dem Zugfahrzeug gekoppelten Anhänger umfasst;
- Fig. 2: ausschnittsweise eine schematische Perspektivansicht des Anhängers;
- Fig. 3: ausschnittsweise eine weitere schematische Perspektivansicht des Anhängers; und
- Fig. 4: eine schematische Perspektivansicht eines Energiespeichers des Anhängers.

In den Figuren sind gleiche oder funktionsgleiche Elemente mit gleichen Bezugszeichen versehen.

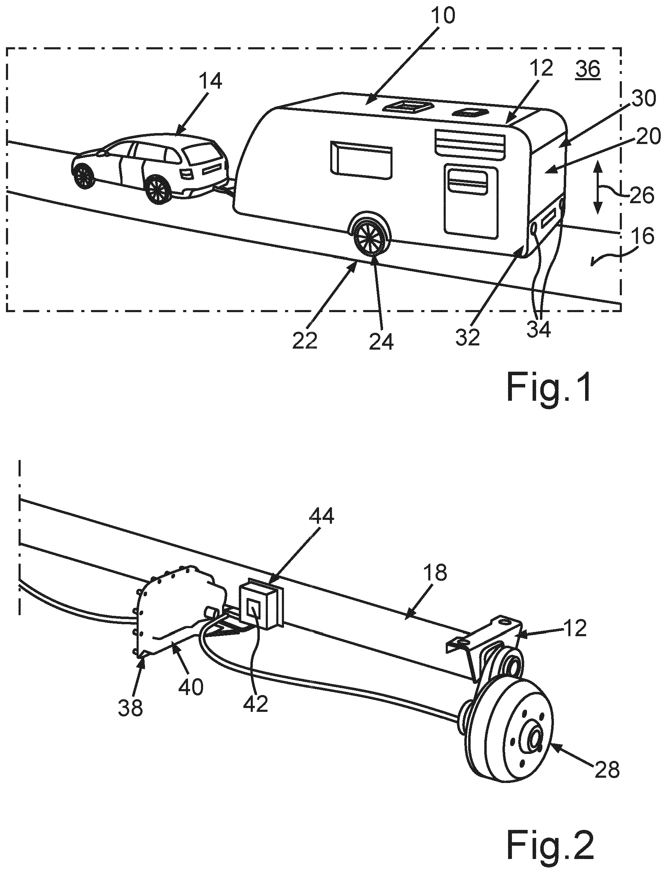

Fig. 1 zeigt in einer schematischen Perspektivansicht ein Gespann 10, welches einen Anhänger 12 und ein Zugfahrzeug 14 aufweist. Sowohl der Anhänger 12 als auch das Zugfahrzeug 14 sind Fahrzeuge, insbesondere Landfahrzeuge. Es ist erkennbar, dass das Zugfahrzeug 14 ein zusätzlich zu dem Anhänger 12 vorgesehenes und bezüglich des Anhängers 12 externes Fahrzeug ist, und umgekehrt ist der Anhänger 12 ein zusätzlich zu dem Zugfahrzeug 14 ausgebildetes und bezüglich des Zugfahrzeugs 14 externes Fahrzeug. Der separat von dem Zugfahrzeug 14 ausgebildete Anhänger 12 ist bei dem Gespann 10 mechanisch und gelenkig mit dem Zugfahrzeug 14 verbunden, sodass das Zugfahrzeug 14 einen Anhänger 12 bewegen, das heißt ziehen und drücken kann. Beispielsweise fährt das Gespann 10 entlang eines Bodens 16, welcher beispielsweise eine Fahrbahn ist oder bildet, entlang welcher das Gespann 10 fährt. Bei dem in den Figuren gezeigten Ausführungsbeispiel ist der Anhänger 12 als ein Wohnwagen ausgebildet. Aus einer Zusammenschau von Fig. 1 bis 4 ist erkennbar, dass der Anhänger 12 ein Fahrgestell 18 aufweist, welches beispielsweise als ein Rahmen ausgebildet ist. Außerdem weist der Anhänger 12 einen Aufbau 20 auf, welcher separat von dem Fahrgestell 18 ausgebildet und an dem Fahrgestell 18 befestigt, insbesondere durch das Fahrgestell 18 getragen, ist. Außerdem weist der Anhänger 12 bei dem in den Figuren gezeigten Ausführungsbeispiel, insbesondere genau, eine einfach auch als Achse bezeichnete Fahrzeugachse 22 auf, welche vorliegend genau zwei Bodenkontaktelemente 24 aufweist. Die Bodenkontaktelemente 24 sind bei dem in den Figuren gezeigten Ausführungsbeispiel Fahrzeugräder, welche auch einfach als Räder bezeichnet werden. Über die Bodenkontaktelemente 24 ist der Anhänger 12 entlang seiner durch einen Doppelpfeil 26 veranschaulichten, einfach auch als Hochrichtung bezeichneten Fahrzeughochrichtung nach unten hin an dem Boden 16 abgestützt. Fährt das Gespann 10 entlang des Bodens 16, während der Anhänger 12 entlang seiner Fahrzeughochrichtung (Doppelpfeil 26) nach unten hin über die Bodenkontaktelemente 24 an dem Boden 16 abgestützt ist, so rollen die Bodenkontaktelemente 24 direkt an dem Boden 16 ab. Dabei dreht sich das jeweilige Bodenkontaktelement 24 um eine jeweilige Raddrehachse relativ zu dem Fahrgestell 18. Somit sind die Bodenkontaktelemente 24 drehbar an dem Fahrgestell 18 gehalten.

Durch den Aufbau 20 des Anhängers 12 ist wenigstens ein Innenraum gebildet, in welchem sich Personen aufhalten können.

Der Anhänger 12 kann beispielsweise ein motorloses Fahrzeug sein, welches keinen Antriebsmotor aufweist und demzufolge nicht aus eigener Kraft angetrieben werden kann.

Aus Fig. 2 ist erkennbar, dass der Anhänger 12 eine Bremseinrichtung 28 aufweist, mittels welcher die Bodenkontaktelemente 24 insbesondere relativ zu dem Fahrgestell 18 abgebremst werden können, wodurch der Anhänger 12 insgesamt abgebremst werden kann. Die Bremseinrichtung 28 ist beispielsweise eine Betriebsbremsanlage oder Bestandteil einer Betriebsbremsanlage des Anhängers 12. Das Zugfahrzeug 14 weist beispielsweise eine insbesondere als Batterie ausgebildete Energiequelle auf, welche beispielsweise in einem Bordnetz des Zugfahrzeugs 14 angeordnet ist. Beispielsweise kann in der Energiequelle des Zugfahrzeugs 14 elektrische Energie gespeichert sein, wobei die in der Energiequelle des Zugfahrzeugs 14 gespeicherte, elektrische Energie über das Bordnetz bereitgestellt werden kann. Da die Energiequelle des Zugfahrzeugs 14 Bestandteil des Zugfahrzeugs 14 und nicht etwa Bestandteil des Anhängers 12 ist, ist die Energiequelle des Zugfahrzeugs 14 eine bezüglich des Anhängers 12 externe, zusätzlich dazu vorgesehene Komponente.

Der Anhänger 12 weist außerdem eine insbesondere heckseitige und somit beispielsweise am Heck 30 des Anhängers 12 angeordnete Lichtanlage 32 auf, welche beispielsweise wenigstens zwei insbesondere in Fahrzeugquerrichtung des Anhängers 12 voneinander beabstandete Bremsleuchten 34 aufweisen kann. Die jeweilige Bremsleuchte 34 weist beispielsweise wenigstens eine Lichtquelle auf, mittels welcher unter Nutzung von elektrischer Energie, mit welcher die jeweilige Bremsleuchte 34 versorgbar ist oder versorgt wird, Licht, welches auch als Bremslicht bezeichnet wird, an eine Umgebung 36 des Anhängers 12 ausgestrahlt werden kann. Das mittels der jeweiligen Bremsleuchte 34 an oder in die Umgebung 36 ausstrahlbare oder ausgestrahlte Licht (Bremslicht) kann beispielsweise mit dem menschlichen Auge und somit von einer sich in der Umgebung 36 aufhaltenden Person optisch wahrgenommen werden. Wird beispielsweise eine insbesondere als Betriebsbremse ausgebildete Bremsanlage des Zugfahrzeugs 14 beispielsweise durch den Fahrer oder die Fahrerin des Zugfahrzeugs 14 betätigt, um dadurch das Zugfahrzeug 14 und insbesondere das Gespann 10 abzubremsen, so werden beispielsweise die Bremsleuchten 34 aktiviert, wodurch die Bremsleuchten 34 das genannte Licht an oder in die Umgebung 36 ausstrahlen. Hierdurch kann beispielsweise ein hinter dem Anhänger 12 fahrender Verkehrsteilnehmer oder eine hinter dem Anhänger 12 fahrende Verkehrsteilnehmerin das mittels der jeweiligen Bremsleuchte 34 ausgestrahlte Licht optisch wahrnehmen und darauf optisch hingewiesen werden, dass das Gespann 10 eine Bremsung durchführt, mithin abgebremst wird.

Der Anhänger 12 weist des Weiteren eine Anhängerstabilisierungseinrichtung 38 auf, welche beispielsweise zumindest mittelbar an dem Fahrgestell 18 gehalten und Bestandteil des Anhängers 12 ist. Die Anhängerstabilisierungseinrichtung 38 wird auch einfach als Stabilisierungseinrichtung oder Stabilisierungssystem bezeichnet und ist vorliegend elektrisch, das heißt unter Nutzung von elektrischer Energie, mit welcher das Anhängerstabilisierungssystem versorgbar ist oder versorgt wird, betreibbar. Dabei umfasst die Anhängerstabilisierungseinrichtung 38 wenigstens oder genau einen vorliegend elektrisch betreibbaren Aktor 40, mittels welchem zum Stabilisieren einer Fahrt des Anhängers 12 unter Betreiben des Aktors 40, das heißt durch Betreiben des Aktors 40, die Bremseinrichtung 28 betätigbar und dadurch wenigstens eines der Bodenkontaktelemente 24 abbremsbar ist. Da der Aktor 40 bei dem in den Figuren gezeigten Ausführungsbeispiel ein elektrisch betreibbarer Aktor ist, kann der Aktor 40 unter Nutzung von elektrischer Energie beziehungsweise elektrischem Strom, mit welcher beziehungsweise welchem der Aktor 40 versorgt wird, betrieben werden. Durch Vorliegen des elektrischen Betreibens des Aktors 40 kann der Aktor 40 die Bremseinrichtung 28 betätigen und dadurch das wenigstens eine Bodenkontaktelement 24 abbremsen, wodurch beispielsweise unerwünschte beziehungsweise übermäßige, während einer Fahrt des Anhängers 12 relativ zu dem Boden 16 erfolgende Aufbaubewegungen des Anhängers 12 vermieden werden können, oder solchen Aufbaubewegungen kann mittels des Aktors 40 entgegengewirkt werden, indem der Aktor 40 elektrisch betrieben wird und hierdurch die Bremseinrichtung 28 betätigt und in der Folge das wenigstens eine Bodenkontaktelement 24 abbremst. Beispielsweise ist der Aktor 40 mit der Bremseinrichtung 28 gekoppelt. Die Bremseinrichtung 28 weist beispielsweise je Bodenkontaktelement 24 der Fahrzeugachse 22 eine insbesondere als Reibbremse ausgebildete Bremse auf, wobei der Aktor 40 beispielsweise die jeweilige Bremse betätigen kann, insbesondere durch elektrisches Betreiben des Aktors 40. Hierfür ist beispielsweise der Aktor 40 mit der jeweiligen Bremse gekoppelt oder koppelbar. Das durch den Aktor 40 bewirkte Betätigen der Bremseinrichtung 28 wird auch als Bremseingriff bezeichnet, wobei im Rahmen eines solchen, mittels des Aktors 40 bewirkbaren oder durchführbaren Bremseingriffs wenigstens eine der Bremsen mittels des Aktors 40 betätigt wird, wodurch das jeweilige, der jeweiligen Bremse zugeordnete Bodenkontaktelement 24 gezielt abgebremst werden kann. Hierdurch kann die Fahrt des Anhängers 12, insbesondere gezielt, stabilisiert werden. Durch Stabilisieren der Fahrt des Anhängers 12 kann beispielsweise ein unerwünschter Fahrzustand des Anhängers 12 vermieden werden beziehungsweise einem unerwünschten Fahrzustand des Anhängers 12 kann entgegengewirkt werden, sodass beispielsweise ein gewünschter Fahrzustand des Anhängers 12 herbeigeführt werden kann.

Die Anhängerstabilisierungseinrichtung 38 weist außerdem eine in Fig. 2 besonders schematisch dargestellte, auch als Steuergerät bezeichnete, elektronische Recheneinrichtung 42 auf, mittels welcher der Aktor 40 ansteuerbar und dadurch betreibbar ist, um dadurch die Bremseinrichtung 28 des Anhängers 12 zu betätigen. Insbesondere ist die elektronische Recheneinrichtung 42 dazu ausgebildet, den Aktor 40 anzusteuern, insbesondere zu steuern und/oder zu regeln. Durch Ansteuern des Aktors 40 kann der Aktor 40 betrieben werden und in der Folge die Bremseinrichtung 28 betätigen und somit das wenigstens eine Bodenkontaktelement 24 abbremsen.

Um nun eine besonders hohe Sicherheit realisieren zu können, ist die elektronische Recheneinrichtung 42 dazu ausgebildet, die jeweilige Bremsleuchte 34 anzusteuern, um dadurch mittels der jeweiligen Bremsleuchte 34 bei dem mittels der elektronischen Recheneinrichtung 42 durch Ansteuern des Aktors 40 bewirkten Bremsen des wenigstens einen Bodenkontaktelements 24 das genannte Licht an die Umgebung 36 des Anhängers 12 auszustrahlen. Hierdurch kann dann, wenn mittels des Aktors 40 ein Bremseingriff durchgeführt wird, das Licht mittels der Bremsleuchten 34 an die Umgebung 36 ausgestrahlt werden, sodass bei dem mittels des Aktors 40 bewirkten oder durchgeführten Bremseingriff ein hinter dem Anhänger 12 fahrender Verkehrsteilnehmer optisch auf den Bremseingriff hingewiesen werden kann, insbesondere auch dann, wenn durch den Aktor 40 der Bremseingriff durchgeführt wird, ohne dass eine Bremsanlage des Zugfahrzeugs 14 betätigt wird.

Bei dem in den Figuren gezeigten Ausführungsbeispiel weisen die Anhängerstabilisierungseinrichtung 38 und somit der Anhänger 12 einen eigenen elektrischen Energiespeicher 44 auf, in welchem elektrische Energie, insbesondere elektrochemisch, zu speichern oder gespeichert ist. Dabei ist die jeweilige Bremsleuchte 34 mit der in dem Energiespeicher 44 gespeicherten, elektrischen Energie versorgbar, wodurch die jeweilige Bremsleuchte 34 mittels der in dem Energiespeicher 44 gespeicherten, elektrischen Energie betreibbar ist. Durch Betreiben der jeweiligen Bremsleuchte 34 strahlt die jeweilige Bremsleuchte 34 das genannte Licht an oder in die Umgebung 36 aus.

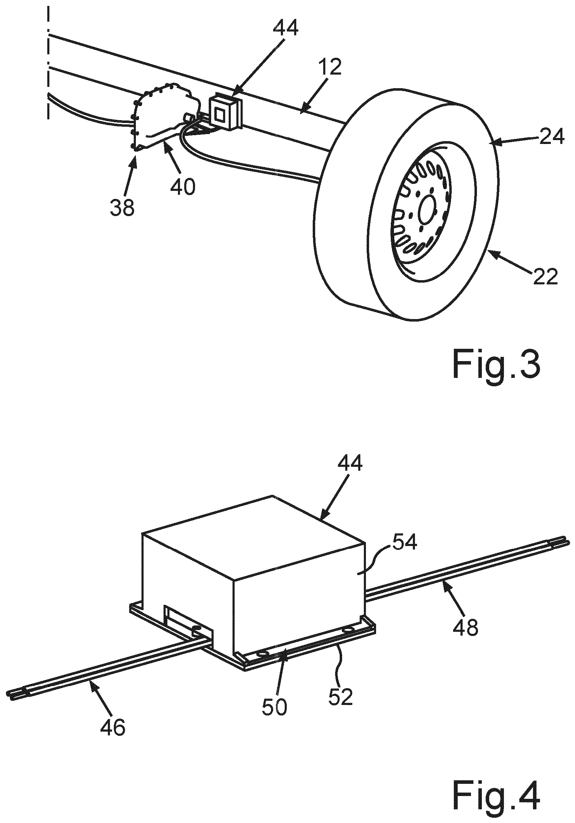

Die Anhängerstabilisierungseinrichtung 38 weist beispielsweise wenigstens ein in den Figuren nicht dargestelltes Anschlusselement auf, welches zumindest mittelbar mit dem Bordnetz und somit mit der Energiequelle des Zugfahrzeugs 14 zumindest elektrisch verbunden werden kann. Dadurch kann die von der Energiequelle über das Bordnetz des Zugfahrzeugs 14 bereitgestellte oder bereitstellbare elektrische Energie auf das Anschlusselement übertragen und von dem Anschlusselement bereitgestellt werden. Die von dem Anschlusselement bereitgestellte elektrische Energie aus der Energiequelle des Zugfahrzeugs 14 kann beispielsweise dem Energiespeicher 44 zugeführt und somit in dem Energiespeicher 44 gespeichert, insbesondere zwischengespeichert, werden. Hierfür ist beispielsweise ein als Zuleitung 46 (Fig. 4) ausgebildetes, erstes Leitungselement vorgesehen, mit welchem beispielsweise das Anschlusselement zumindest elektrisch verbunden ist. Über die Zuleitung 46 kann die von dem Anschlusselement bereitgestellte oder bereitstellbare, elektrische Energie dem Energiespeicher 44 zugeführt und in dem Energiespeicher 44 gespeichert werden. Ferner ist beispielsweise ein vorliegend als Ableitung 48 ausgebildetes, zweites Leitungselement vorgesehen, über welches der Energiespeicher 44 die in ihm gespeicherte elektrische Energie bereitstellen kann. Beispielsweise kann über die Ableitung 48 die in dem Energiespeicher 44 gespeicherte, elektrische Energie der jeweiligen Bremsleuchte 34 und/oder dem Aktor 40 zugeführt werden, um dadurch die jeweilige Bremsleuchte 34 beziehungsweise den Aktor 40 mittels der in dem Energiespeicher 44 gespeicherten, elektrischen Energie zu betreiben. Hierdurch kann die Bremsleuchte 34 das Licht an oder in die Umgebung 36 ausstrahlen, und der Aktor 40 kann den Bremseingriff durchführen.

Der Energiespeicher 44 weist beispielsweise ein Gehäuse 50 auf, welches beispielsweise mehrteilig ausgebildet ist. Dabei umfasst beispielsweise das Gehäuse 50 zwei separat voneinander ausgebildete und miteinander verbundene Gehäuseelemente 52 und 54. Die Gehäuseelemente 52 und 54 begrenzen beispielsweise einen Aufnahmeraum, in welchem beispielsweise Speicherzellen des Energiespeichers 44 aufgenommen sind. Mittels der Speicherzellen kann die elektrische Energie gespeichert werden. Die jeweilige Speicherzelle ist beispielsweise als eine Batterie- oder Akkumulatorzelle ausgebildet. Beispielsweise sind die Speicherzellen jeweilige Einzelzellen, welche beispielsweise elektrisch miteinander verbunden sind. Hierdurch kann der Energiespeicher 44 eine besonders hohe elektrische Spannung bereitstellen, mit welcher die jeweilige Bremsleuchte 34 sowie vorzugsweise der Aktor 40 sowie gegebenenfalls die elektronische Recheneinrichtung 42 versorgt werden können. Insbesondere ist es denkbar, dass über die Ableitung 48 die elektronische Recheneinrichtung 42 mit der in dem Energiespeicher 44 gespeicherten elektrischen Energie versorgbar ist, um dadurch die elektronische Recheneinrichtung 42 mittels der in dem Energiespeicher 44 gespeicherten, elektrischen Energie zu betreiben. Dadurch kann beispielsweise die Recheneinrichtung 42 die in dem Energiespeicher 44 gespeicherte elektrische Energie nutzen, um die Bremsleuchte 34 sowie beispielsweise den Aktor 40 anzusteuern. Beispielsweise ist die Recheneinrichtung 42 in dem Aufnahmeraum angeordnet.

Insgesamt ist erkennbar, dass die jeweilige Bremsleuchte 34, der Aktor 40 und die elektronische Recheneinrichtung 42 mit der in dem elektrischen Energiespeicher 44 gespeicherten, elektrischen Energie versorgt werden können, um dadurch die jeweilige Bremsleuchte 34, den Aktor 40 und die elektronische Recheneinrichtung 42 mittels der in dem Energiespeicher 44 gespeicherten elektrischen Energie zu betreiben. Durch Betreiben der Bremsleuchte 34 stellt die Bremsleuchte 34 das genannte Licht (Bremslicht) bereit, welches an oder in die Umgebung 36 ausgestrahlt wird. Durch Betreiben des Aktors 40 betätigt der Aktor 40 die Bremseinrichtung 28, wodurch der wenigstens eine Bodenkontaktelement 24 abgebremst wird. Durch Betreiben der elektronischen Recheneinrichtung 42 steuert die elektronische Recheneinrichtung 42 den Aktor 40 an, welcher durch sein Ansteuern die Bremseinrichtung 28 betätigt, und die elektronische Recheneinrichtung 42 steuert die Bremsleuchte 34 an. Unter dem Ansteuern der Bremsleuchte 34 ist zu verstehen, dass die Bremsleuchte 34 mit elektrischer Energie insbesondere aus dem Energiespeicher 44 versorgt wird, um dadurch die Bremsleuchte 34 zu aktivieren und zu betreiben, wodurch die Bremsleuchte 34 das Licht (Bremslicht) an oder in die Umgebung 36 ausstrahlt. Es ist erkennbar, dass die Bremsleuchte 34, der Aktor 40 und die elektronische Recheneinrichtung 42 mittels der in dem Energiespeicher 44 gespeicherten, elektrischen Energie betrieben werden können, sodass die Bremsleuchte 34, der Aktor 40 und die elektronische Recheneinrichtung 42 insbesondere auch dann betrieben werden können, wenn der Anhänger 12 von dem Bordnetz des Zugfahrzeugs 14 und somit von dessen Energiequelle getrennt sind, mithin nicht mittels des Zugfahrzeugs 14 oder einer anderen, bezüglich des Anhängers 12 externen Komponente mit elektrischer Energie versorgt werden können. Dadurch kann eine besonders hohe Sicherheit gewährleistet werden.

Denkbar ist, dass die elektronische Recheneinrichtung 42 in dem Gehäuse 50 des elektrischen Energiespeichers 44 angeordnet ist, sodass beispielsweise die Speicherzellen des Energiespeichers 44 und die Recheneinrichtung 42 in demselben Gehäuse 50, insbesondere in demselben Aufnahmeraum des Gehäuses 50, aufgenommen sind. Dabei ist insbesondere die Recheneinrichtung 42 außerhalb des Aktors 40 angeordnet. Alternativ ist es beispielsweise möglich, dass die Recheneinrichtung 42 in einem Gehäuse des Aktors 40 angeordnet ist, sodass beispielsweise die Recheneinrichtung 42 außerhalb des Energiespeichers 44 angeordnet ist.

## Patentansprüche

1. Anhänger (12) für ein Zugfahrzeug (14), mit wenigstens zwei Bodenkontaktelementen (24), über welche der Anhänger (12) in Fahrzeughochrichtung (26) des Anhängers (12) nach unten hin an einem (16) Boden abstützbar ist, mit einer Bremseinrichtung (28) zum Bremsen der Bodenkontaktelemente (24), mit wenigstens einer Bremsleuchte (34), und mit einer Anhängerstabilisierungseinrichtung (38), welche aufweist:
- wenigstens einen Aktor (40), mittels welchem zum Stabilisieren einer Fahrt des Anhängers (12) unter Betreiben des Aktors (40) die Bremseinrichtung (28) betätigbar und dadurch wenigstens eines der Bodenkontaktelemente (24) abbremsbar ist; und
- eine elektronische Recheneinrichtung (42), mittels welcher der Aktor (40) ansteuerbar und dadurch betreibbar ist, um dadurch die Bremseinrichtung (28) des Anhängers (12) zu betätigen;
**dadurch gekennzeichnet, dass**
die elektronische Recheneinrichtung (42) dazu ausgebildet ist, die Bremsleuchte (34) anzusteuern, um dadurch mittels der Bremsleuchte (34) bei dem mittels der elektronischen Recheneinrichtung (42) durch Ansteuern des Aktors (40) bewirkten Bremsen des wenigstens einen Bodenkontaktelements (24) Licht an eine Umgebung (36) des Anhängers (12) auszustrahlen.

2. Anhänger (12) nach Anspruch 1,
**dadurch gekennzeichnet, dass**
der Anhänger (12) einen eigenen elektrischen Energiespeicher (44) zum Speichern von elektrischer Energie aufweist, wobei die Bremsleuchte (34) mit der in dem Energiespeicher (44) gespeicherten, elektrischen Energie versorgbar ist, um dadurch mittels der Bremsleuchte (34) bei dem mittels der elektronischen Recheneinrichtung (42) durch Ansteuern des Aktors (40) bewirkten Bremsen des wenigstens einen Bodenkontaktelements (24) das Licht an die Umgebung (36) des Anhänger (12) auszustrahlen.

3. Anhänger (12) nach Anspruch 2,
**dadurch gekennzeichnet, dass**
der Aktor (40) als ein elektrisch betreibbarer Aktor ausgebildet und mit der in dem Energiespeicher (44) gespeicherten, elektrischen Energie versorgbar und dadurch mittels der in dem Energiespeicher (44) gespeicherten, elektrischen Energie betreibbar ist.

4. Anhänger (12) nach Anspruch 2 oder 3,
**dadurch gekennzeichnet, dass**
die elektronische Recheneinrichtung (42) mit der in dem Energiespeicher (44) gespeicherten, elektrischen Energie versorgbar und dadurch mittels der in dem Energiespeicher (44) gespeicherten, elektrischen Energie betreibbar ist.

5. Verfahren zum Betreiben eines Anhängers (12) für ein Zugfahrzeug (14), bei welchem der Anhänger (12) wenigstens zwei Bodenkontaktelemente (24), über welche der Anhänger (12) in Fahrzeughochrichtung (26) des Anhängers (12) nach unten hin an einem Boden (16) abgestützt ist, eine Bremseinrichtung (28) zum Bremsen der Bodenkontaktelemente (24), wenigstens eine Bremsleuchte (34) und eine Anhängerstabilisierungseinrichtung (38) aufweist, welche aufweist:
- wenigstens einen Aktor (40), mittels welchem unter Betreiben des Aktors (40) die Bremseinrichtung (28) betätigt wird, wodurch wenigstens eines der Bodenkontaktelemente (24) abgebremst und eine Fahrt des Anhängers (12) stabilisiert wird; und
- eine elektronische Recheneinrichtung (42), mittels welcher der Aktor (40) angesteuert und dadurch betrieben wird, wodurch die Bremseinrichtung (28) des Anhängers (12) betätigt wird;
**dadurch gekennzeichnet, dass**
die Bremsleuchte (34) mittels der elektronischen Recheneinrichtung (41) angesteuert wird, wodurch mittels der Bremsleuchte (34) bei dem mittels der elektronischen Recheneinrichtung (42) durch Ansteuern des Aktors (40) bewirkten Bremsen des wenigstens einen Bodenkontaktelements (24) Licht an eine Umgebung (36) des Anhängers (12) ausgestrahlt wird.

6. Verfahren nach Anspruch 5,
**dadurch gekennzeichnet, dass**
der Anhänger (12) einen eigenen elektrischen Energiespeicher (44) zum Speichern von elektrischer Energie aufweist, wobei die Bremsleuchte (34) mit der in dem Energiespeicher (44) gespeicherten, elektrischen Energie versorgt wird, wodurch die Bremsleuchte (34) betrieben und mittels der Bremsleuchte (34) bei dem mittels der elektronischen Recheneinrichtung (42) durch Ansteuern des Aktors (40) bewirkten Bremsen des wenigstens einen Bodenkontaktelements (24) das Licht an die Umgebung (36) des Anhänger (12) ausgestrahlt wird.

7. Verfahren nach Anspruch 6,
**dadurch gekennzeichnet, dass**
der Aktor (40) als ein elektrisch betreibbarer Aktor (40) ausgebildet und mit der in dem Energiespeicher (44) gespeicherten, elektrischen Energie versorgt und dadurch mittels der in dem Energiespeicher (44) gespeicherten, elektrischen Energie betrieben wird.

8. Verfahren nach Anspruch 6 oder 7,
**dadurch gekennzeichnet, dass**
die elektronische Recheneinrichtung (42) mit der in dem Energiespeicher (44) gespeicherten, elektrischen Energie versorgt und dadurch mittels der in dem Energiespeicher (44) gespeicherten, elektrischen Energie betrieben wird.

## Claims

1. A trailer (12) for a towing vehicle (14), with at least two ground contact elements (24), via which the trailer (12) can be supported downwards on a ground (16) in vehicle vertical direction (26) of the trailer (12), with a braking device (28) for braking the ground contact elements (24), with at least one brake light (34) and with a trailer stabilizing device (38), which comprises:
- at least one actuator (40), by means of which the braking device (28) can be actuated while operating the actuator (40) for stabilizing a movement of the trailer (12) and thereby at least one of the ground contact elements (24) can be braked; and
- an electronic computing device (42), by means of which the actuator (40) is controllable and thereby operable to thereby actuate the braking device (28) of the trailer (12),
**characterized in that**
the electronic computing device (42) is formed to control the brake light (34) to thereby emit light to an environment (36) of the trailer (12) by means of the brake light (34) upon braking of the at least one ground contact element (24) effected by means of the electronic computing device (42) by controlling the actuator (40).

2. The trailer (12) according to claim 1,
**characterized in that**
the trailer (12) comprises an own electrical energy storage (44) for storing electrical energy, wherein the brake light (34) can be supplied with the electrical energy stored in the energy storage (44) to thereby emit the light to the environment (36) of the trailer (12) by means of the brake light (34) upon braking of the at least one ground contact element (24) effected by means of the electronic computing device (42) by controlling the actuator (40).

3. The trailer (12) according to claim 2,
**characterized in that**
the actuator (40) is formed as an electrically operable actuator and can be supplied with the electrical energy stored in the energy storage (44) and is thereby operable by means of the electrical energy stored in the energy storage (44).

4. The trailer (12) according to claim 2 or 3,
**characterized in that**
the electronic computing device (42) can be supplied with the electrical energy stored in the energy storage (44) and is thereby operable by means of the electrical energy stored in the energy storage (44).

5. A method for operating a trailer (12) for a towing vehicle (14), in which the trailer (12) comprises at least two ground contact elements (24), via which the trailer (12) is supported downwards on a ground (16) in vehicle vertical direction (26) of the trailer (12), a braking device (28) for braking the ground contact elements (24), at least one brake light (34) and a trailer stabilizing device (38), which comprises:
- at least one actuator (40), by means of which the braking device (28) is actuated while operating the actuator (40), whereby at least one of the ground contact elements (24) is braked and a movement of the trailer (12) is stabilized; and
- an electronic computing device (42), by means of which the actuator (40) is controlled and thereby operated, whereby the braking device (28) of the trailer (12) is actuated,
**characterized in that**
the brake light (34) is controlled by means of the electronic computing device (41), whereby light is emitted to an environment (36) of the trailer (12) by means of the brake light (34) upon braking of the at least one ground contact element (24) effected by means of the electronic computing device (42) by controlling the actuator (40).

6. The method according to claim 5,
**characterized in that**
the trailer (12) comprises an own electrical energy storage (44) for storing electrical energy, wherein the brake light (34) is supplied with the electrical energy stored in the energy storage (44), whereby the brake light (34) is operated and the light is emitted to the environment (36) of the trailer (12) by means of the brake light (34) upon braking of the at least one ground contact element (24) effected by means of the electronic computing device (42) by controlling the actuator (40).

7. The method according to claim 6,
**characterized in that**
the actuator (40) is formed as an electrically operable actuator (40) and is supplied with the electrical energy stored in the energy storage (44) and is thereby operated by means of the electrical energy stored in the energy storage (44).

8. The method according to claim 6 or 7,
**characterized in that**
the electronic computing device (42) is supplied with the electrical energy stored in the energy storage (44) and is thereby operated by means of the electrical energy stored in the energy storage (44).

## Revendications

1. Remorque (12) pour un véhicule tracteur (14), comportant au moins deux éléments en contact avec le sol (24) par l'intermédiaire desquels la remorque (12) peut être en appui sur un sol (16), vers le bas dans la direction de hauteur du véhicule (26) de la remorque (12), comportant un dispositif de freinage (28) pour freiner les éléments en contact avec le sol (24), au moins un feu de frein (34), et ayant un dispositif de stabilisation de remorque (38) qui comporte :
- au moins un actionneur (40) au moyen duquel le dispositif de freinage (28) peut être actionné afin de stabiliser un trajet de la remorque (12) en manœuvrant l'actionneur (40) et en permettant ainsi de freiner au moins un des éléments en contact avec le sol (24) ; et
- un dispositif de calcul électronique (42) au moyen duquel l'actionneur (40) peut être commandé et ainsi être manœuvré afin d'actionner le dispositif de freinage (28) de la remorque (12) ;
**caractérisée en ce que**
le dispositif de calcul électronique (42) est conçu pour commander le feu de frein (34) afin d'émettre de la lumière vers un environnement (36) de la remorque (12) au moyen du feu de frein (34), lors du freinage du au moins un élément en contact avec le sol (24) effectué en commandant l'actionneur (40) au moyen du dispositif de calcul électronique (42).

2. Remorque (12) selon la revendication 1,
**caractérisée en ce que**
la remorque (12) comporte son propre accumulateur d'énergie électrique (44) pour stocker de l'énergie électrique, le feu de frein (34) pouvant être alimenté par l'énergie électrique stockée dans l'accumulateur d'énergie (44), afin d'émettre ainsi la lumière vers l'environnement (36) de la remorque (12), au moyen du feu de frein (34), lors du freinage du au moins un élément en contact avec le sol (24) effectué en commandant l'actionneur (40) au moyen du dispositif de calcul électronique (42).

3. Remorque (12) selon la revendication 2,
**caractérisée en ce que**
l'actionneur (40) est conçu comme un actionneur à commande électrique et peut être alimenté par l'énergie électrique stockée dans l'accumulateur d'énergie (44) et peut ainsi être manœuvré au moyen de l'énergie électrique stockée dans l'accumulateur d'énergie (44).

4. Remorque (12) selon la revendication 2 ou 3,
**caractérisée en ce que**
le dispositif de calcul électronique (42) peut être alimenté par l'énergie électrique stockée dans l'accumulateur d'énergie (44) et peut ainsi être manœuvré au moyen de l'énergie électrique stockée dans l'accumulateur d'énergie (44).

5. Procédé pour faire fonctionner une remorque (12) pour un véhicule tracteur (14), dans lequel la remorque (12) comporte au moins deux éléments en contact avec le sol (24) par l'intermédiaire desquels la remorque (12) est en appui sur un sol (16), vers le bas dans une direction de hauteur du véhicule (26) de la remorque (12), un dispositif de freinage (28) pour freiner les éléments en contact avec le sol (24), au moins un feu de frein (34) et un dispositif de stabilisation de remorque (38) comportant :
au moins un actionneur (40) au moyen duquel le dispositif de freinage (28) est actionné en manœuvrant l'actionneur (40), en sorte qu'au moins un des éléments en contact avec le sol (24) est freiné et un trajet de la remorque (12) est stabilisé ; et
un dispositif de calcul électronique (42) au moyen duquel l'actionneur (40) est commandé et ainsi manœuvré, en sorte que le dispositif de freinage (28) de la remorque (12) est actionné ;
**caractérisé en ce que**
le feu de frein (34) est commandé au moyen du dispositif de calcul électronique (42), en sorte que de la lumière est émise vers un environnement (36) de la remorque (12) au moyen du feu de frein (34), lors du freinage du au moins un élément en contact avec le sol (24) effectué en commandant l'actionneur (40) au moyen du dispositif de calcul électronique (42).

6. Procédé selon la revendication 5,
**caractérisé en ce que**
la remorque (12) comporte son propre accumulateur d'énergie électrique (44) pour stocker de l'énergie électrique, le feu de frein (34) étant alimenté par l'énergie électrique stockée dans l'accumulateur d'énergie (44), en sorte que le feu de frein (34) fonctionne et la lumière est émise vers l'environnement (36) de la remorque (12) au moyen du feu de **frein (34),** lors du freinage du au moins un élément en contact avec le sol (24) effectué en commandant l'actionneur (40) au moyen du dispositif de calcul électronique (42).

7. Procédé selon la revendication 6,
**caractérisé en ce que**
l'actionneur (40) est conçu comme un actionneur à commande électrique et est alimenté par l'énergie électrique stockée dans l'accumulateur d'énergie (44) et est ainsi manœuvré au moyen de l'énergie électrique stockée dans l'accumulateur d'énergie (44).

8. Procédé selon la revendication 6 ou 7,
**caractérisé en ce que**
le dispositif de calcul électronique (42) est alimenté par l'énergie électrique stockée dans l'accumulateur d'énergie (44) et est ainsi manœuvré au moyen de l'énergie électrique stockée dans l'accumulateur d'énergie (44).
